# EUROPÄISCHE PATENTSCHRIFT

(11) **EP 2 859 169 B1**
(45) Veröffentlichungstag und Bekanntmachung des Hinweises auf die Patenterteilung: **09.01.2019**
(21) Anmeldenummer: 13726231.7
(22) Anmeldetag: 03.06.2013
(51) Int. Cl.: E06B 3/62, B60J 10/00, F16J 15/02

(54) **DICHTUNGSPROFIL**
SEAL PROFILE
PROFILÉ D'ÉTANCHÉITÉ

(30) Priorität: 12.06.2012 DE 102012209819
(43) Veröffentlichungstag der Anmeldung: 15.04.2015
(73) Patentinhaber: Semperit AG Holding, 1031 Wien (AT); SCHÜCO International KG, 33609 Bielefeld (DE)
(72) Erfinder: DÄUSCHINGER, Gerhard, 94227 Zwiesel (DE); SCHWAIBERGER, Gerhard, 94560 Offenberg (DE)
(74) Vertreter: Müller Schupfner & Partner Patent- und Rechtsanwaltspartnerschaft mbB
(86) Internationale Anmeldenummer: PCT/EP2013/061364
(87) Internationale Veröffentlichungsnummer: WO 2013/186071

(56) Entgegenhaltungen:
- EP-A1- 1 136 297
- EP-A2- 2 199 522
- DE-A1- 10 100 456
- DE-U1-202007 016 186

## Beschreibung

Die vorliegende Erfindung betrifft ein Dichtungsprofil insbesondere zur Anordnung zwischen einer Glasscheibe und einem Rahmen.

Dichtungsprofile der in Rede stehenden Art sind aus dem Stand der Technik hinlänglich bekannt. So werden beispielsweise bereits co-extrudierte Dichtungsprofile, d. h. Dichtungsprofile, die aus zumindest zwei gleichzeitig hergestellten Materialien bestehen, angeboten, wobei diese co-extrudierten Profile insbesondere den Dämmwert bzw. die Wärmedämmfähigkeit des Dichtungsprofils verbessern. Problematisch bei den aus dem Stand der Technik bekannten Dichtungsprofilen ist jedoch, dass die zwischen dem Rahmen und der Glasscheibe zwischen denen das Dichtungsprofil angeordnet ist, wirkenden Anpresskräfte im eingebauten Zustand des Dichtungsprofils sehr hoch sind. In der Folge kann es beispielsweise zum Herauswandern des Profils aus seiner eingebauten Position oder auch zu Anrissen oder zum Einknicken des Dichtungsprofils kommen. Wird ein aus dem Stand der Technik bekanntes Dichtungsprofil im angerissenen bzw. eingeknickten Zustand verbaut, so senkt sich die Lebensdauer der durch das Dichtungsprofil hergestellten Dichtung dramatisch.

Ferner kennt der Stand der Technik aus der DE 10100456 A1 eine strangförmige, aus elastischem Material bestehende Profildichtung, welche in den Spalt zwischen einer Scheibe und einem Rahmen einsetzbar ist und eine äußere und eine innere Dichtungslippe zur Anlage an der Scheibe aufweist, wobei die äußere Dichtungslippe aus einem härteren elastischen Material besteht als die innere Dichtungslippe und wobei eine Reihe von Hohlkammern innerhalb des Dichtungsprofils angeordnet sind.

Die EP 2199522 A2 offenbart ein strangförmiges Dichtungsprofil aus elastischem Material, insbesondere zum Abdichten einer Scheibe gegenüber einem Rahmen oder einer Tür oder eines Fensters, welches einen Grundkörper, einen mit dem Grundkörper verbundenen Dichtungsabschnitt und einen mit dem Grundkörper verbundenen Lippenabschnitt aufweist, wobei über das Dichtungsprofil verteilt eine Vielzahl von Einkerbungen vorgesehen sind und wobei der Grundabschnitt zumindest bereichsweise aus einem besonders gut wärmeisolierenden Material ausgebildet ist.

Darüber ist aus der Druckschrift EP 1 136 297 A1 eine Verglasungsdichtung mit einem Haltefuß zur Verankerung der Dichtung in einer Haltenut, wobei die Dichtung einen Dichtlippe und einen Dichtwulst aufweist. Der Dichtwulst enthält einen Schaumkern.

Aufgabe der vorliegenden Erfindung ist es, ein Dichtungsprofil bereit zu stellen, welches insbesondere ein Einknicken oder ein Anreißen des Dichtungsprofils nach dem Einbau verhindert und eine bestimmte Verformung während des Einbaus des Dichtungsprofils erlaubt und somit verhindert, dass es nach dem Einbau aus seiner Einbauposition wandert. Weiterhin soll das Dichtungsprofil eine verbesserte Wärmedämmfähigkeit aufweisen.

Diese Aufgabe wird gelöst mit einem Dichtungsprofil gemäß dem unabhängigen Anspruch. Weitere Vorteile und Merkmale der Erfindung ergeben sich aus den abhängigen Ansprüchen.

Erfindungsgemäß ist ein, insbesondere bevorzugt strangförmiges Dichtungsprofil insbesondere zur Anordnung zwischen einer Glasscheibe und einem Rahmen vorgesehen, welches einen Wulstabschnitt und einen Lippenabschnitt aufweist, wobei der Wulstabschnitt und der Lippenabschnitt mit einem Grundabschnitt des Dichtungsprofils verbunden sind und je ein freies Ende aufweisen, wobei ein erster Materialsteg vorgesehen ist, welcher sich zumindest im Grundabschnitt erstreckt, wobei ein zweiter Materialbereich vorgesehen ist, welcher sich zumindest im Wulstabschnitt erstreckt, wobei ein dritter Materialbereich vorgesehen ist, welcher sich zumindest im Wulstabschnitt und benachbart zum zweiten Materialbereich erstreckt, wobei der dritte Materialbereich aus einem Stoff mit geringerer Steifigkeit besteht als der erste und der zweite Materialbereich. Das Dichtungsprofil ist erfindungsgemäß strangförmig ausgebildet, wobei sich sowohl seine Außengeometrie als auch die Geometrie der einzelnen Materialbereiche über die gesamte Stranglänge im Wesentlichen - d.h. von Fertigungstoleranzen abgesehen - nicht ändern. Das Dichtungsprofil wird erfindungsgemäß unabhängig vom Herstellungsmaterial in die drei Abschnitte, Wulstabschnitt, Lippenabschnitt und Grundabschnitt, unterteilt. Der Wulstabschnitt und der Lippenabschnitt sind dabei die beiden Abschnitte, welche zur Anlage an einer Glasscheibe vorgesehen sind und jeweils gegenüberliegend zu ihren, an der Glasscheibe anliegenden, freien Enden mit einem Grundabschnitt verbunden sind. Der Grundabschnitt liegt erfindungsgemäß am Rahmen an, welcher bevorzugt das Dichtungsprofil gegen die Glasscheibe presst. Weiterhin weist das Dichtungsprofil erfindungsgemäß drei Materialbereiche auf, welche sich erfindungsgemäß in zumindest einem, bevorzugt aber über zumindest zwei der drei Abschnitte, Grundabschnitt, Wulstabschnitt und Lippenabschnitt, erstrecken und mittels Co-Extrusion gemeinsam hergestellt sind. Es ist ein erster Materialbereich vorgesehen, welcher sich erfindungsgemäß zumindest im Grundabschnitt erstreckt, wobei er jedoch bevorzugt auch in den Wulstabschnitt und den Lippenabschnitt hineinragt. Der erste Materialbereich ist bevorzugt aus einem Material hergestellt, welches eine hohe Tragfestigkeit, Witterungsbeständigkeit und Rissfestigkeit aufweist, wobei besonders bevorzugt ein EPDM oder ein ähnlicher Kautschuk- bzw. Gummiwerkstoff zum Einsatz kommen kann. Weiterhin ist ein zweiter Materialbereich vorgesehen, welcher sich erfindungsgemäß zumindest im Wulstabschnitt erstreckt. Der zweite Materialbereich ist bevorzugt aus einem Material mit hoher Dämmwirkung bzw. niedrigem Wärmeleitkoeffizienten hergestellt, wobei insbesondere bevorzugt Moosgummi zum Einsatz kommen kann. Vorzugsweise grenzt der erste Materialbereich an den zweiten Materialbereich, wodurch erreicht werden kann, dass der erste Materialbereich den zweiten Materialbereich in vorteilhafter Weise abstützt und schützt. Insbesondere bevorzugt kann auf diese Weise, bei hohen Kräften auf das Dichtungsprofil, ein Einknicken des zweiten Materialbereiches verhindert werden, da dieser durch den ersten Materialbereich gestützt wird. Weiterhin bevorzugt grenzt der zweite Materialbereich entlang einer, in einer Schnittansicht als Kontaktlinie ausgebildeten Grenzfläche, bzw. Kontaktfläche, an den ersten Materialbereich. Vorzugsweise ist dabei in einer Schnittebene, bzw. Schnittansicht des Dichtungsprofils die länge der Kontaktlinie zwischen erstem und zweitem Kontaktbereich zumindest ein Viertel, besonders bevorzugt zumindest ein Drittel, der Umfangslänge des zweiten Materialbereiches in derselben Schnittansicht. Erfindungsgemäß ist es vorgesehen, dass der erste Materialbereich, ausgehend von dem freien Ende des Wulstabschnitts über den Grundabschnitt bis zum freien Ende des Lippenabschnitts, den zweiten Materialbereich umgibt, um dessen Herstellungsmaterial gegen Einflüsse von Witterung und Strahlung zu schützen. Weiterhin ist erfindungsgemäß ein dritter Materialbereich vorgesehen, welcher sich zumindest im Wulstabschnitt und erfindungsgemäß benachbart zum zweiten Materialbereich erstreckt. Vorzugsweise ist der dritte Materialbereich auf der, in einem eingebauten Zustand des Dichtungsprofils zur Glasscheibe hin gewandten Seite des Dichtungsprofils angeordnet. Mit anderen Worten ist der dritte Materialbereich dem Grundabschnitt und damit dem Rahmen, gegenüberliegend im Dichtungsprofil vorgesehen. Der dritte Materialbereich ist dabei aus einem Stoff mit geringerer Steifigkeit hergestellt als der erste und der zweite Materialbereich. Der Begriff der Steifigkeit wird dabei im Zusammenhang mit der vorliegenden Anmeldung als die Fähigkeit des Materials definiert, sich einer Verformung zu widersetzen. Mit anderen Worten ist die Steifigkeit die Eigenschaft des Herstellungsmate-rials auf eine Verformung mit einer bestimmten Rückstellkraft zu reagieren. Dabei sollen für die vorliegende Erfindung bevorzugt nur Verformungen im elastischen Bereich berücksichtigt werden, wobei die Steifigkeit entsprechend die Kraft bzw. bei Normierung auf die Fläche, die entsprechende Spannung ist, welche das Dichtungsprofil bzw. das Herstellungsmaterial des Dichtungsprofils einer bestimmten elastischen Dehnung oder Stauchung entgegen setzt. Bei Gummiwerkstoffen ist es üblich, anstatt der Steifigkeit, die sich im Wesentlichen proportional zu dieser verhaltende Härte, beispielsweise angegeben mit der Einheit Shore A, zu verwenden. Je höher die Härte bzw. Steifigkeit eines Werkstoffes ist, desto schwerer ist er elastisch verformbar, d. h. desto größere Kräfte sind notwendig, um einen bestimmten elastischen Verformungsgrad herzustellen. Der Stoff, aus welchem der dritte Materialbereich hergestellt ist, soll also eine möglichst geringe Steifigkeit bzw. Härte aufweisen, um das elastische Verformverhalten des Wulstabschnittes und des gesamten Dichtungsprofils gezielt zu beeinflussen. In einer besonders bevorzugten Ausführungsform kann der dritte Materialbereich eine Aussparung innerhalb des zweiten Materialbereiches bzw. innerhalb eines Raumes zwischen dem zweiten und dem ersten Materialbereich sein, welche mit Luft aufgefüllt ist. Alternativ bevorzugt kann der dritte Materialbereich auch aus einem Schaumgummi mit besonders hohem Gas- bzw. Luftanteil hergestellt sein, welcher eine geringe Steifigkeit bei gleichzeitig hoher Dämmwirkung aufweist. Bevorzugt kann auf diese Weise gleichzeitig die Dämmwirkung des gesamten Dichtungsprofils erhöht werden, da bei einer geringeren Wärmeleitfähigkeit im dritten Materialbereich der Wärmedurchgangskoeffizient, bzw. der U-Wert des gesamten Dichtungsprofils geringer wird.

Erfindungsgemäß bildet die Querschnittsfläche des dritten Materialbereiches eine erste Kontaktlinie mit der Querschnittsfläche des zweiten Materialbereiches aus, wobei das Verhältnis der Länge der ersten Kontaktlinie zum Umfang der Querschnittsfläche des dritten Materialbereiches im Bereich von 0,2 - 1, vorzugsweise 0,3 - 0,8, und insbesondere bevorzugt bei ca. 0,7 liegt. Das Verhältnis der Länge der ersten Kontaktlinie zum Umfang der Querschnittsfläche des dritten Materialbereiches ist mit anderen Worten ein Ausdruck dafür, in welchem Maße der dritte Materialbereich innerhalb des zweiten Materialbereiches angeordnet ist. Ist das Verhältnis 1, so ist die Länge der ersten Kontaktlinie also die Länge entlang derer der dritte Materialbereich vom zweiten Materialbereich umgeben ist gleich dem Umfang des Querschnitts des dritten Materialbereiches und der dritte Materialbereich ist in diesem Fall vollständig vom zweiten Materialbereich umgeben. Je kleiner das Verhältnis der Länge der ersten Kontaktlinie zum Umfang der Querschnittsfläche des dritten Materialbereiches wird, desto größer ist gleichzeitig die Kontaktfläche des dritten Materialbereiches zum ersten Materialbereich. Computersimulationen bzw. FEM-Simulationen der Anmelderin haben gezeigt, dass das hier beschriebene Verhältnis der Länge der ersten Kontaktlinie zum Umfang der Querschnittsfläche des dritten Materialbereiches eine Auswirkung auf das Biegeverhalten bzw. das Verformungsverhalten sowohl des Wulstabschnittes als auch des gesamten Dichtungsprofils hat, wobei durch Auswahl eines bestimmten, hier beschriebenen Verhältnisses erreicht werden kann, dass sich der Wulstabschnitt bei Anlage an der Scheibe und dem Anpressen durch den Rahmen derart verformt, dass ein Einknicken oder Anreißen des Dichtungsprofils verhindert werden kann. Bei einem Verhältnis der Länge der ersten Kontaktlinie zum Umfang der Querschnittsfläche des dritten Materialbereiches von 0,2 ist der dritte Materialbereich zum größten Teil vom Material des ersten Materialbereiches umgeben, das heißt der dritte Materialbereich stellt mit anderen Worten eine lokale Schwächung des ersten Materialbereiches dar. Da vorzugsweise das Herstellungsmaterial des ersten Materialbereiches eine im Vergleich zum zweiten Materialbereich und zum dritten Materialbereich hohe Steifigkeit aufweist, wird bei diesem bevorzugten Verhältnis von 0,2 die Gesamtsteifigkeit des Dichtungsprofils geringer ausfallen, als bei einem nicht geschwächten ersten Materialbereich. Ist dagegen der dritte Materialbereich vollständig innerhalb des ohnehin aus einem weicheren Material hergestellten zweiten Materialbereiches angeordnet, so wird der erste Materialbereich seine volle Stützwirkung entfalten und die Gesamtsteifigkeit des Dichtungsprofils wird relativ hoch sein.

Vorzugsweise ist ein erster Zustand und ein zweiter Zustand des Dichtungsprofils definiert, wobei das Dichtungsprofil im ersten Zustand unverformt und ohne von außen einwirkende Kraft definiert ist, während im zweiten Zustand eine zwischen einer Glasscheibe und einem Rahmen wirkende Kraft auf das Dichtungsprofil einwirkt und es derart verformt, dass das Dichtungsprofil gegen die Glasscheibe gepresst wird. Besonders bevorzugt ist der zweite Zustand dabei gekennzeichnet durch den Verformungsgrad des Dichtungsprofils bei welchem eine Streckenlast notwendig ist, welche im Bereich von bevorzugt 3000 - 5000 N/m und insbesondere bevorzugt bei ca. 3500 - 4000 N/m liegt. Versuche der Anmelderin haben gezeigt, dass bei diesen bevorzugten Streckenlasten ein Herauswandern des Dichtungsprofils aus der vorgesehenen Einbauposition verhindert werden kann und gleichzeitig ein Einknicken des Dichtungsprofils nicht stattfindet. Die Streckenlast bezieht sich in diesem Zusammenhang auf die Länge des mit einer Kraft beaufschlagten Dichtungsprofilstranges.

Bevorzugt weist das Dichtungsprofil eine Erstreckung entlang einer Spaltachse auf, wobei in einem ersten Zustand das unverformte Dichtungsprofil eine erste Erstreckung aufweist und in einem zweiten Zustand das verformte Dichtungsprofil eine zweite Erstreckung aufweist und wobei das Verhältnis der zweiten Erstreckung zur ersten Erstreckung bei 0,5 - 0,85, bevorzugt bei 0,6 - 0,75, und insbesondere bevorzugt bei ca. 0,65 - 0,7 liegt. Während des Einbaus wird das Dichtungsprofil zwischen der Glasscheibe und dem Rahmen angeordnet, wobei das zwischen dem Rahmen und der Glasscheibe befindliche Dichtungsprofil in den zweiten Zustand verformt wird. Das Dichtungsprofil füllt mit anderen Worten einen zwischen dem Rahmen und der Glasscheibe bestehenden Spalt aus, wobei die Spaltachse vorzugsweise quer zur Glasscheibe liegt, und wobei die Spaltachse entlang der geringsten Erstreckung des Spaltes zwischen dem Rahmen und der Glasscheibe verläuft. Längs der Spaltachse weist das Dichtungsprofil bei Vorliegen des zweiten Zustandes eine zweite Erstreckung auf, welche kleiner ist als die erste Erstreckung. Vorzugsweise ist das Verhältnis der zweiten Erstreckung der ersten Erstreckung dabei kleiner als 0,85 und größer als 0,5. Es hat sich gezeigt, dass erfindungsgemäße Dichtungsprofile bei gegebenen Dimensionen des Dichtungsprofils auch für unterschiedliche Spaltbreiten bzw. Erstreckungen des Spaltes längs der Spaltachse verwendet werden können, wobei jeweils die Grenzwerte des Verhältnisses der zweiten Erstreckung zur ersten Erstreckung von 0,5 - 0,85 geeignet sind, um eine ausreichende Dichtwirkung des Dichtungsprofils erreichen zu können. Weiterhin hat es sich gezeigt, dass die optimale Dichtwirkung, d. h. eine ausreichende Verformung um eine bestimmte Anpresskraft des Dichtungsprofils sowohl an der Glasscheibe als auch am Rahmen zu erzielen, bei einem Verhältnis der Länge der zweiten Erstreckung zur ersten Erstreckung von 0,65 - 0,7 gegeben ist. Fällt das Verhältnis der zweiten Erstreckung zur ersten Erstreckung unter einen Wert von 0,5 so besteht die Gefahr des teilweise Anreißens oder Einknickens bestimmter Bereiche des Dichtungsprofils.

Vorzugsweise weist der dritte Materialbereich im ersten Zustand des Dichtungsprofils eine maximale Erstreckung auf, die in einem Verhältnis von 0,05 - 0,6, bevorzugt 0,2 - 0,55, und insbesondere bevorzugt von ca. 0,25 - 0,3 zur ersten Erstreckung des Dichtungsprofils steht. Die maximale Erstreckung des dritten Materialbereiches wird dabei ebenfalls entlang der Spaltachse gemessen. Je größer dabei das Verhältnis der maximalen Erstreckung des dritten Materialbereiches zur ersten Erstreckung des Dichtungsprofils ist, desto größer ist letztendlich die im zweiten Materialbereich und/oder im ersten Materialbereich eingebrachte Materialschwächung und gleichzeitig desto geringer die Anpresskraft, welche zur Verformung des Dichtungsprofils bis hin zum zweiten Zustand nötig ist. Gleichzeitig kann durch die Vergrößerung der maximalen Erstreckung des dritten Materialbereiches relativ zur ersten Erstreckung des Dichtungsprofils die Wärmedämmwirkung des Dichtungsprofils erhöht werden, da der dritte Materialbereich bevorzugt aus einem Material mit geringerer Wärmeleitfähigkeit hergestellt ist.

Ferner bevorzugt weist der erste Materialbereich angrenzend an den dritten Materialbereich eine Mindestdicke auf, wobei auf derselben Geraden entlang derer die Mindestdicke gemessen ist, der Wulstabschnitt eine Dicke aufweist und wobei das Verhältnis der Mindestdicke zur Dicke des Wulstabschnitts im Bereich von 0,05 - 0,6, bevorzugt 0,1 - 0,45, und insbesondere bevorzug bei ca. 0,25 - 0,4 liegt. Die Gerade entlang derer sowohl die Mindestdicke des ersten Materialbereiches als auch die Dicke des Wulstabschnitts gemessen wird, ist bevorzugt quer zur Außenfläche des ersten Materialbereiches bzw. zur Außenfläche des Dichtungsprofils angeordnet. Mit anderen Worten ist die Außenfläche des ersten Materialbereiches die Fläche, welche dem zweiten Materialbereich bzw. dem dritten Materialbereich abgewandt ist, wobei die Gerade jeweils im Bereich angeordnet ist, in welchem der erste Materialbereich benachbart zum dritten Materialbereich ist. Je größer die Mindestdicke des ersten Materialbereiches im entsprechenden Bereich ist, desto höher ist die Biegesteifigkeit des gesamten Wulstabschnittes bei einer gleichbleibenden, bzw. vorgegebenen Dicke des gesamten Wulstabschnittes entlang der Geraden. Für den Fall, dass der erste Materialbereich eine entlang der Spaltachse variable Dicke aufweist, so ist für die Bemessung der Mindestdicke jeweils die Dicke zu verwenden, an welcher der zum dritten Materialbereich benachbarte erste Materialbereich seine geringste Erstreckung entlang der Geraden aufweist. Bei einer konstanten Mindestdicke des ersten Materialbereiches wird die zum dritten Materialbereich benachbarte Dicke des Wulstabschnittes im Bereich ihres größten Wertes gemessen. Es hat sich gezeigt, dass die Mindestdicke des ersten Materialbereiches nicht kleiner als ein Zwanzigstel der Gesamtdicke des Wulstabschnittes in diesem Bereich sein sollte, da ansonsten eine erhöhte Knickgefahr besteht bzw. das Dichtungsprofil keine ausreichende Stabilität aufweist. Insbesondere da der erste Materialbereich aus einem Material mit geringerer Wärmedämmfähigkeit als der zweite und der dritte Materialbereich hergestellt ist, sollte das Verhältnis der Mindestdicke des ersten Materialbereiches zur Dicke des Wulstabschnittes nicht größer als 0,6 sein, da ansonsten das gesamte Dichtungsprofil eine zu geringe Wärmedämmfähigkeit aufweist. Versuche der Anmelderin haben gezeigt, dass insbesondere ein Verhältnisbereich von 0,3 - 0,4 einen optimalen Kompromiss zwischen ausreichender Stabilität und geringer Knickneigung und gleichzeitig hoher Dämmfähigkeit des Dichtungsprofils bewirkt.

Vorzugsweise weist der Wulstabschnitt eine Querschnittsfläche auf, die in einem Verhältnis von 0,1 - 0,5, vorzugsweise 0,2 - 0,4, und insbesondere bevorzugt von ca. 0,3 zur Querschnittsfläche des gesamten Dichtungsprofils steht. Da das Dichtungsprofil bzw. die drei Materialbereiche des Dichtungsprofils vorzugsweise einstückig und in einem Verfahrensschritt hergestellt sind, ist eine Abgrenzung des Wulstabschnittes vom Grundabschnitt nicht aufgrund materialtechnischer Gegebenheiten zu definieren. Der Wulstabschnitt ist daher bevorzugt gemeinsam mit dem Lippenabschnitt definiert, wobei der Wulstabschnitt und der Lippenabschnitt bevorzugt V-förmig voneinander weg weisen und jeweils an ihrem, von ihren freien Enden wegweisenden Ende mit dem Grundabschnitt verbunden sind. Entsprechend wird die Trennlinie zwischen Wulstabschnitt und Grundabschnitt als die Linie verstanden, welche von dem Punkt aus, an welchem der Wulstabschnitt zum Lippenabschnitt benachbart ist, derart verläuft, dass sie im Wesentlichen quer zur Außenfläche des Dichtungsprofils den Wulstabschnitt vom Grundabschnitt trennt. Mit anderen Worten verläuft die Trennlinie zwischen Wulstabschnitt und Grundabschnitt bei einem Dichtungsprofil im ersten Zustand senkrecht zur Außenfläche des Dichtungsprofils bis hin zum untersten Punkt des V's, welches von dem Wulstabschnitt und dem Lippenabschnitt aufgespannt wird. In ähnlicher Weise ist die Trennlinie zwischen dem Lippenabschnitt und dem Grundabschnitt als die Linie definiert, welche im Wesentlichen senkrecht zur Außenfläche des Dichtungsprofils bis hin zu dem Punkt definiert, in welchem der Wulstabschnitt an den Lippenabschnitt grenzt. Als Folge dieser Definition haben der Wulstabschnitt und der Lippenabschnitt in einer geschnittenen Ansicht des Dichtungsprofils keine Kontaktlinie aneinander, sondern berühren sich lediglich in einem Punkt.

Insbesondere bevorzugt bildet die Querschnittsfläche des zweiten Materialbereiches eine erste Kontaktlinie mit der Querschnittsfläche des ersten Materialbereiches aus, wobei das Verhältnis der Länge der ersten Kontaktlinie zum Umfang der Querschnittsfläche des Dichtungsprofils im Bereich von 0,1 - 0,5, vorzugsweise 0,2 - 0,4, und insbesondere bevorzugt bei ca. 0,35 liegt. Die Länge der ersten Kontaktlinie bezogen auf die Gesamtumfangslänge des Dichtungsprofils im Querschnitt ist mit anderen Worten ein Maß dafür, über welche Länge der erste Materialbereich mit Material des zweiten Materialbereiches ausgekleidet ist und dafür, über welche Länge der dritte Materialbereich zwischen dem ersten und dem zweiten Materialbereich angeordnet ist. Je größer bei einer gegebenen Außengeometrie des Dichtungsprofils, somit also das Verhältnis der Länge der Kontaktlinie zur Umfangslänge des Dichtungsprofils, desto größer wird auch der zweite Materialbereich im Verhältnis zum ersten Materialbereich ausgebildet sein. Weiterhin kann es sein, dass bei einer gegebenen Außengeometrie des Dichtungsprofils das beschriebene Verhältnis größer wird, je kleiner die Kontaktfläche des ersten Materialbereiches zum dritten Materialbereich ausgebildet ist. Es versteht sich weiterhin, dass die Länge der ersten Kontaktlinie auch bei einer mit Vorsprüngen und Rücksprüngen versehenen Kontaktfläche des ersten Materialbereiches zum zweiten Materialbereich beispielsweise als wellige Kontaktfläche ausgebildet, ansteigt, wobei eine solche Ausbildung der Kontaktfläche bevorzugt sein kann, um die Haftwirkung zwischen dem ersten und dem zweiten Materialbereich mit einer Formschlusswirkung zu unterstützen.

Vorzugsweise liegt der Wulstabschnitt des Dichtungsprofils in einem zweiten Zustand des Dichtungsprofils derart an der Glasscheibe an, dass die Kontaktfläche des ersten Materialbereiches mit der Glasscheibe zumindest ein 0,01 bis 0,5-faches, bevorzugt zumindest ein 0,05- bis 0,2-faches und besonders bevorzugt ein 0,1- bis 0,15-faches einer Kontaktfläche des zweiten Materialbereiches mit der Glasscheibe ist. Mit anderen Worten ist im zweiten Zustand des Dichtungsprofils gewährleistet, dass der erste Materialbereich an der Glasscheibe anliegt. Dieses liegt insbesondere darin begründet, dass der erste Materialbereich aus einem witterungsbeständigeren Material ausgebildet ist, als der zweite Materialbereich. Wenn im zweiten Zustand des Dichtungsprofils bevorzugt der Wulstabschnitt und der Lippenabschnitt des Dichtungsprofils gegen die Glasscheibe gepresst werden, so ist bevorzugt an den nach außen weisenden Seiten der Kontaktflächen des Wulstabschnittes und bevorzugt auch des Lippenabschnittes jeweils Material des ersten Materialbereiches an die Glasscheibe gepresst, während an den nach innen weisenden Seiten der Kontaktflächen des Wulstabschnittes, bzw. des Lippenabschnittes jeweils Material des zweiten Materialbereiches gegen die Glasscheibe gepresst ist. Als nach innen weisender Bereich wird in diesem Zusammenhang der jeweils in Richtung des, zwischen dem Wulstabschnitt und dem Lippenabschnitt befindlichen Hohlraums weisende Teil der Kontaktflächen des Lippenabschnitts und des Wulstabschnitts bezeichnet. Je größer dabei die Kontaktfläche des ersten Materialbereiches mit der Glasscheibe im Verhältnis zur Kontaktfläche des zweiten Materialbereiches mit der Glasscheibe ist, desto größer ist auch die Fähigkeit des Dichtungsprofils bei dynamischen Belastungen, beispielsweise bei Anliegen eines Windes und einer daraus resultierenden Rüttelbewegung an der Fensterscheibe und/oder an dem Rahmen, weiterhin das Material des zweiten Materialbereiches gegen Witterungseinflüsse zu schützen. Bei dem bevorzugten Maximalwert des Verhältnisses von 0,15 ist somit eine deutliche Überdimensionierung und damit verbunden ein höheres Sicherheitsmaß für die Größe der Kontaktfläche des ersten Materialbereiches mit der Glasscheibe vorgesehen, wobei auch bei einer nennenswerten Verschiebung des Dichtungsprofils aus seiner vorgesehenen Einbauposition noch ein Schutz des Materials des zweiten Materialbereiches vor Witterungseinflüssen wie beispielsweise Feuchtigkeit, Strahlung oder chemischen Einflüssen gewährleistet ist.

Vorzugsweise ist in dem Bereich, in dem sich der Wulstabschnitt und der Lippenabschnitt am nächsten sind, eine Vertiefung vorgesehen, wobei die Vertiefung vorzugsweise mit einem Radius gerundet ausgebildet ist. Die zwischen dem Lippenabschnitt und dem Wulstabschnitt vorgesehene Vertiefung kann beispielsweise als Aussparung oder als Einkerbung ausgebildet sein, wobei vorzugsweise ein Radius vorgesehen ist, welcher eine besonders spannungsarme Verformung des Grenzbereiches zwischen dem Wulstabschnitt und dem Lippenabschnitt ermöglicht. Es hat sich gezeigt, dass durch Vorsehen eines solchen gerundeten Vertiefungsbereiches die Kerbwirkung bei einer Verformung des Dichtungsprofils vom ersten Zustand bis hin zum zweiten Zustand in dem Übergangsbereich zwischen Wulstabschnitt und Lippenabschnitt verringert werden kann. Je größer dabei der Radius gewählt ist, desto geringer ist die Gefahr dass im Zwischenbereich zwischen Lippenbereich und Wulstabschnitt Risse entstehen und das Profil einreißt oder sogar durchreißt.

Besonders bevorzugt steht der Radius in einem Verhältnis von 0,05 - 0,3, bevorzugt 0,1 - 0,2, und besonders bevorzugt von ca. 0,11 - 0,13 zur Differenz der ersten und zweiten Erstreckung. Es hat sich gezeigt, dass bei einer bestimmten Differenz der Erstreckung des Dichtungsprofils vom ersten bis hin zum zweiten Zustand der Radius der Vertiefung zwischen dem Wulstabschnitt und dem Lippenabschnitt nicht kleiner sein sollte als ein 0,05-faches der Differenz zwischen den beiden Erstreckungen. Dabei wird der Radius bevorzugt im ersten Zustand des Dichtungsprofils gemessen, wobei verständlicherweise der Radius im zweiten Zustand des Dichtungsprofils größer wäre als im ersten Zustand.

Weiterhin bevorzugt weist die erste Kontaktlinie zwischen dem ersten Materialbereich und dem zweiten Materialbereich insbesondere bevorzugt im Bereich zwischen dem dritten Materialbereich und dem freien Ende des Wulstabschnitts einen S-förmigen Verlauf auf. Der S-förmige Verlauf der Kontaktlinie zwischen dem ersten Materialbereich und dem zweiten Materialbereich ist insbesondere dadurch definiert, dass im Bereich des dritten Materialbereiches der erste Materialbereich eine größere Dicke aufweist, als im Bereich des freien Endes des Wulstabschnittes. Als Folge weist der erste Materialbereich im Bereich des dritten Materialbereiches eine höhere Biegesteifigkeit auf als im Bereich des freien Endes und es kann eine bevorzugter Biege- bzw. Verformungsverlauf des Dichtungsprofils bzw. insbesondere des Wulstabschnittes erreicht werden, bei welchem eine optimale Anlage des freien Endes an der Glasscheibe erzielt wird. Weiterhin ist es bevorzugt, den ersten Materialbereich nur an den Stellen des Dichtungsprofils möglichst dick zu halten, an welchen an hohe Biegesteifigkeit bzw. eine Knickfestigkeit und eine hohe Witterungsbeständigkeit gefordert ist, wobei in allen anderen Bereichen möglichst Material des zweiten Materialbereiches vorgesehen ist, welches eine höhere Wärmedämmung ermöglicht. Entsprechend ist der erste Materialbereich auf Höhe des dritten Materialbereiches mit einer ausreichenden Dicke ausgelegt, um ein Einknicken des Dichtungsprofils zu verhindern und im Bereich des freien Endes des Wulstabschnittes möglichst dünn ausgelegt, um eine hohe Wärmedämmwirkung durch Vorhandensein eines hohen Anteils von Material des zweiten Materialbereiches zu erzielen.

Weitere Vorteile und Merkmale der vorliegenden Erfindung ergeben sich aus der nachfolgenden Beschreibung einer bevorzugten Ausführungsform des erfindungsgemäßen Dichtungsprofils mit Bezug auf die beigefügten Figuren. Es versteht sich, dass einzelne Merkmale und Ausführungsbeispiele der verschiedenen gezeigten Ausführungsformen im Rahmen der Erfindung miteinander kombiniert werden können.

Es zeigen:
Fig. 1 Eine Schnittansicht einer bevorzugten Ausführungsform des erfindungsgemäßen Dichtungsprofils im ersten Zustand,
Fig. 2 eine Schnittansicht einer bevorzugten Ausführungsform des erfindungsgemäßen Dichtungsprofils im zweiten Zustand,
Fig. 3 Schnittansicht eines bekannten nicht zur Erfindung gehörenden Ausführungsbeispiels,
Fig. 4 Schnittansicht einer bevorzugten Ausführungsform des erfindungsgemäßen Dichtungsprofils.

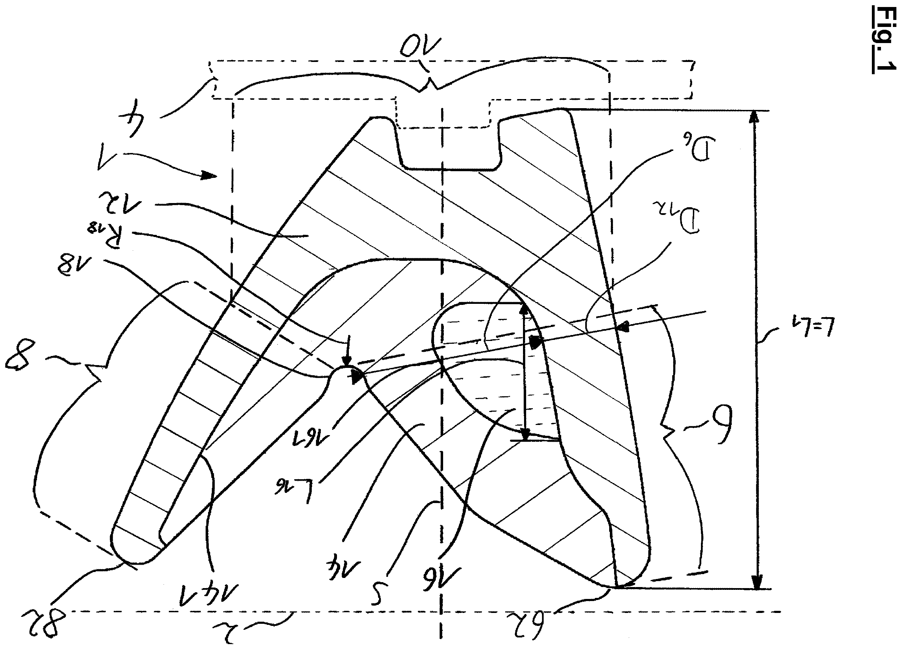

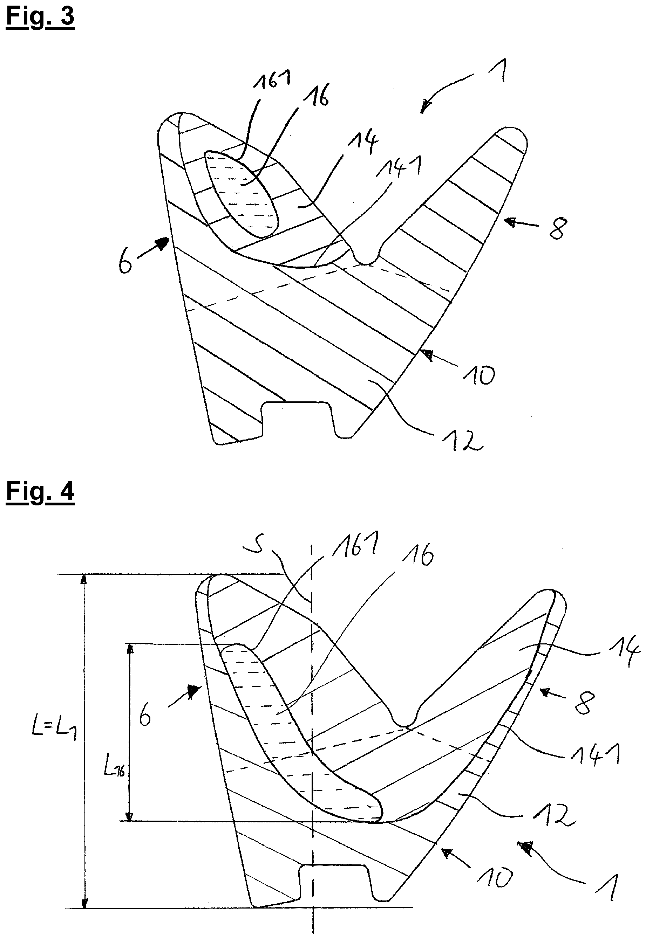

Fig. 1 zeigt eine Schnittansicht in einer bevorzugten Ausführungsform des erfindungsgemäßen Dichtungsprofils im ersten Zustand, wobei das Dichtungsprofil nicht zwischen einer Glasscheibe 2 und einem Rahmen 4 (jeweils gestrichelt dargestellt) angeordnet ist. Erfindungsgemäß unterteilt sich die Geometrie des Dichtungsprofils 1 in einen Grundabschnitt 10, welcher vorzugsweise auf der Seite des Rahmens 4 angeordnet ist, einem Wulstabschnitt 6 und einem Lippenabschnitt 8. Der Wulstabschnitt 6 und der Lippenabschnitt 8 weisen jeweils ein freies Ende 62, 82 auf, an welchem beide Abschnitte 6, 8 an einer Glasscheibe 2 zur Anlage gebracht werden können. Erfindungsgemäß weist das Dichtungsprofil 1 einen ersten Materialbereich 12 auf, welcher sich zumindest im Grundabschnitt 10 erstreckt. Der erste Materialbereich 1 erstreckt sich auch in den Lippenabschnitt 8 und in den Wulstabschnitt 6. Weiterhin erfindungsgemäß ist ein zweiter Materialbereich 14 vorgesehen, welcher sich zumindest im Wulstabschnitt 6 erstreckt. Wie gezeigt, ist es bevorzugt, dass der zweite Materialbereich 14 sich auch in den Grundabschnitt 10 und in den Lippenabschnitt 8 hinein erstreckt. Im Bereich des Wulstabschnittes 6 ist ein dritter Materialbereich 16 vorgesehen, welcher bevorzugt zumindest vom Material des zweiten Materialbereiches 14 umgeben ist. Der dritte Materialbereich 16 kann vorzugsweise aus Luft, aus geschäumtem Kunststoff oder aus einem geschäumten Gummi mit vergleichsweise geringer d. h. im Vergleich zum Material des zweiten Materialbereiches 14 und des ersten Materialbereiches 12 geringer Dichte und Steifigkeit gebildet sein. Wie in der Figur dargestellt, wird der dritte Materialbereich 16 vorzugsweise vom Material des zweiten Materialbereiches 14 und vom Material des ersten Materialbereiches 12 umgeben bzw. begrenzt, wobei der dritte Materialbereich 16 in geschnittener Ansicht eine Kontaktlinie 161 zum Material des zweiten Materialbereiches 14 bildet. Dabei ist die Länge der Kontaktlinie 161 bevorzugt größer als die Länge der Kontaktlinie, welche der dritte Materialbereich 16 mit dem Material des ersten Materialbereiches 12 bildet. Besonders bevorzugt kann der dritte Materialbereich 16 auch vollständig innerhalb des zweiten Materialbereiches 14 angeordnet sein, wobei die Länge der Kontaktlinie 161 gleich der Gesamtumfangslänge des dritten Materialbereiches 16 in der Schnittansicht ist (siehe auch Fig. 3). Vorzugsweise schließt die Kontaktlinie 161 an jedem ihrer beiden Enden, mit denen sie auf den ersten Materialbereich 12 stößt, einen Winkel mit der zum dritten Materialbereich 16 weisenden Fläche des ersten Materialbereiches 12 ein, wobei am näher an der Scheibe angeordneten Ende der Kontaktlinie 161 ein spitzer Winkel, d.h. kleiner als 90°, und an dem anderen Ende ein stumpfer Winkel, d.h. größer 90°, vorgesehen ist. Während sich das Dichtungsprofil 1 in seinem ersten Zustand, d. h. in seinem unverformten Zustand befindet, weist der dritte Materialbereich 16 vorzugsweise eine Längserstreckung L₁₆ längs der Spaltachse S auf, wobei die maximale Erstreckung L₁₆ des dritten Materialbereiches zur Erstreckung L₁ des Dichtungsprofils im ersten Zustand längs der Spaltachse in einem Verhältnis von 0,05 - 0,6, bevorzugt 0,2 - 0,55 und insbesondere bevorzugt von ca. 0,25 - 0,3 steht. Je größer dabei die Erstreckung L₁₆ des dritten Materialbereiches, desto größer auch die lokale Schwächung des Dichtungsprofils im Bereich des Wulstabschnitts 6 und/oder des Grundabschnittes 10. Um die Verbiegbarkeit und auch die Wärmeisolationsfähigkeit nicht nur des Wulstabschnittes 6, sondern auch des Lippenabschnitts 8 zu erhöhen kann es bevorzugt sein, dass auch im Lippenabschnitt 8 ein dritter Materialbereich 16 vorgesehen ist. Dieser Materialbereich im Lippenabschnitt 8 weist bevorzugt eine kleinere Querschnittsfläche auf als der dritte Materialbereich 16 des Wulstabschnitts 6. Bevorzugt ist wie in der Figur dargestellt der Lippenabschnitt 8 mit einer geringeren Dicke quer zu seiner Längserstreckungsrichtung, d. h. Erstreckung vom Grundabschnitt 10 weg, ausgelegt, wobei der Wulstabschnitt 6 bevorzugt den Großteil der Wärmeisolation und Dichtungsfunktion übernimmt. Weiterhin ist es bevorzugt, dass der zweite Materialbereich 14 entlang einer Kontaktlinie 141 an den ersten Materialbereich 12 grenzt, wobei wie in der Figur dargestellt diese Kontaktlinie 141 im Bereich des dritten Materialbereiches 16 unterbrochen ist, da dort der zweite Materialbereich 14 nicht an den ersten Materialbereich 12 grenzt. Das Verhältnis der Länge der ersten Kontaktlinie 141 zum Gesamtumfang des Dichtungsprofils 1 ist dabei ein Ausdruck für sowohl die geometrische Gestaltung des Dichtungsprofils, als auch für den Anteil des zweiten Materialbereiches 14 am Gesamtmaterial des Dichtungsprofils, sowie auch für die Länge entlang derer der dritte Materialbereich 16 zwischen dem ersten Materialbereich 12 und dem zweiten Materialbereich 14 angeordnet ist. Bevorzugt ist in dem Bereich, in dem sich der Wulstabschnitt 6 und der Lippenabschnitt 8 am nächsten sind, eine Vertiefung 18 vorgesehen, welche besonders bevorzugt mit einem Radius R₁₈ gerundet ausgebildet ist. Diese Vertiefung 18 dient insbesondere dazu, bei einer Verformung des Dichtungsprofils 1 in seinen zweiten Zustand und einem dabei auftretenden "Aufklappen" des vom Wulstabschnitt 6 und vom Lippenabschnitt 8 gebildeten Vs Spannungsspitzen im Bereich der zwischen dem Wulstabschnitt 6 und dem Lippenabschnitt 8 gebildeten Kerbe zu verringern. Es hat sich gezeigt, dass mittels des Einstellens der richtigen Rundung bzw. des richtigen Rundungsradius R₁₈ die Lebensdauer des Dichtungsprofils deutlich erhöht werden kann, indem die Neigung zu Rissen oder Anrissen deutlich reduziert wird. Bevorzugt weist der ersten Materialbereich 12 benachbart zum dritten Materialbereich 16 eine Dicke D₁₂ auf, wobei diese Dicke vorzugsweise quer zur in der Figur links gezeigten Außenfläche des Dichtungsprofils 1 gemessen wird. Entlang derselben Geraden wie auch die Dicke D₁₂ wird die Dicke D₆ des Wulstabschnittes 6 gemessen, wobei das Verhältnis D₁₂ zu D₆ vorzugsweise im Bereich von 0,05 bis 0,6, bei der in Fig. 1 gezeigten Ausführungsform bevorzugt bei ca. 0,29 liegt. Der Grundabschnitt 10 weist an seiner Unterseite einen Rücksprung auf, welcher bevorzugt dazu dient, den Rahmen 4 bzw. den Festlegungsabschnitt des Rahmens 4 aufzunehmen und auf diese Weise das Dichtungsprofil 1 im zweiten Zustand gegen Verlagerung quer zur Spaltachse S zu sichern. Besonders bevorzugt ist dabei, solange sich das Dichtungsprofil 1 im ersten Zustand befindet, zumindest eine der beiden, angrenzend zum Rücksprung gebildeten Schultern nicht senkrecht zur Spaltachse ausgerichtet, sondern erreicht die senkrechte Ausrichtung erst nach Verformung des Dichtungsprofils 1 in den zweiten Zustand. Diese besondere geometrische Ausbildung des Bereiches um den Rücksprung am Grundabschnitt 10 dient insbesondere der Vereinfachung des Einbaus des Dichtungsprofils 1 in den Bereich zwischen der Glasscheibe 2 und dem Rahmen 4.

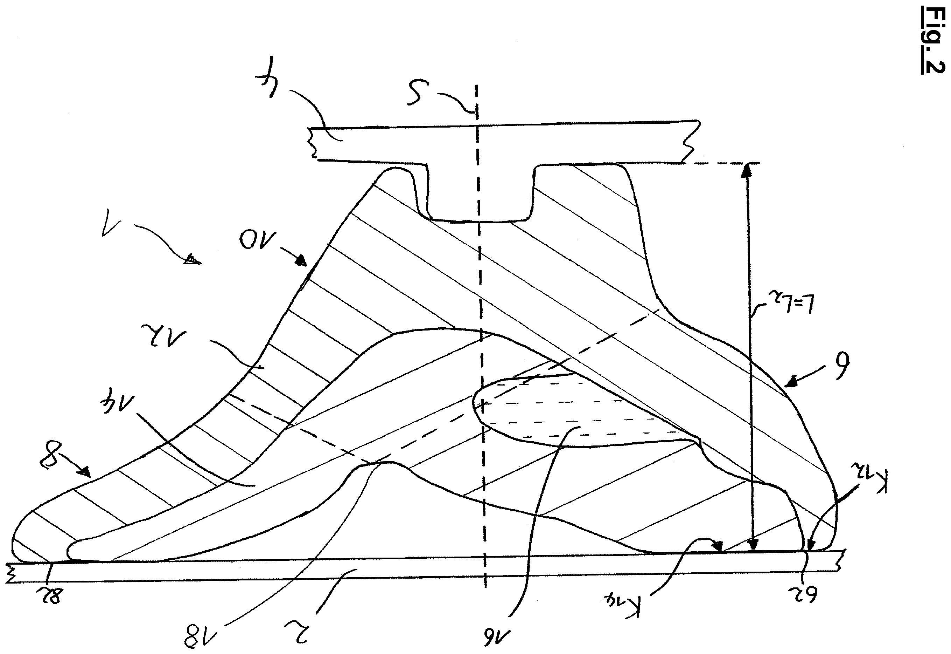

Fig. 2 zeigt eine Schnittansicht einer bevorzugten Ausführungsform des erfindungsgemäßen Dichtungsprofils 1 im zweiten Zustand. Der zweite Zustand ist insbesondere dadurch gekennzeichnet, dass das Dichtungsprofil 1 zwischen einer Glasscheibe 2 und einem Rahmen 4 eingeschoben und verklemmt ist, wobei der Wulstabschnitt 6 und der Lippenabschnitt 8 im Vergleich zum in Fig. 1 gezeigten ersten Zustand, jeweils nach außen gebogen sind und an der Glasscheibe 2 anliegen. Im zweiten Zustand reduziert sich die Erstreckung L des Dichtungsprofils 1 entlang der Spaltachse S auf eine Erstreckung L₂. Bevorzugt überschreitet die für das Zusammenpressen des Dichtungsprofils 1 auf diese Erstreckung L₂ nötige Kraft, bzw. Streckenlast bezogen auf die Länge des jeweils zusammengepressten Stranges, einen Wert von ca. 5000 N/m nicht. Der zweite Zustand des Dichtungsprofils 1 ist bevorzugt nicht nur durch das Erreichen der entsprechenden Verformung des Dichtungsprofils 1, damit dieses in einem Spalt zwischen der Glasscheibe 2 und dem Rahmen 4 festlegbar ist, sondern auch durch das Unterschreiten einer Maximallast von ca. 5000 N/m gekennzeichnet. Weiterhin ist in der Figur deutlich gezeigt, dass sowohl der erste, als auch der zweite Materialbereich 12, 14 im Bereich der freien Enden 62, 82 des Wulstabschnittes 6 und des Lippenabschnittes 8 an der Glasscheibe 2 zur Anlage gelangen. Das bevorzugt besonders witterungsbeständige Material des ersten Materialbereiches 12 schützt auf diese Weise das Material des zweiten Materialbereiches 14 gegen Umwelteinflüsse. Bevorzugt liegen am freien Ende des Wulstabschnitts 6 der erste Materialbereich 12 mit einer Kontaktfläche K₁₂ und der zweite Materialbereich 14 mit einer Kontaktfläche K₁₄ an der Glasscheibe 2 an. Es ist hierbei bevorzugt, dass der erste Kontaktbereich 12 auch bei Auftreten von Belastungsschwankungen an der Dichtungsprofil-Glas-Verbindung nicht von der Glasscheibe 2 abhebt, wobei dies insbesondere durch das Einstellen einer bestimmten Mindestkontaktfläche K₁₂, welche bevorzugt zumindest ein 0,01-faches der Kontaktfläche K₁₄ des zweiten Materialbereiches 14 ist, erreicht wird. Bevorzugt werden ähnliche Verhältnisse der Kontaktflächen des ersten und des zweiten Materialbereiches 12, 14 auch am Lippenabschnitt 8, bzw. an dessen freiem Ende 82, eingestellt.

Figur 3 zeigt ein Ausführungsbeispiel nach dem Stand der Technik in dem ersten Zustand. Figur 4 zeigt ein Schnittansicht einer bevorzugten Ausführungsform des erfindungsgemäßen Dichtungsprofils 1 in dem ersten Zustand. Bei dem in Fig. 3 gezeigten Beispiel ist der dritte Materialbereich 16 vollständig vom Material des zweiten Materialbereiches 14 umgeben. Entsprechend ist das Verhältnis der Länge der Kontaktlinie 161 zum Umfang der Querschnittsfläche des dritten Materialbereiches 16 gleich 1. Weiterhin ist dargestellt, dass der zweite Materialbereich 14 sich bevorzugt nur im Wulstabschnitt 6 erstreckt, wohingegen der Lippenabschnitt 8 und der Grundabschnitt 10 vollständig aus dem Material des ersten Materialbereiches gebildet sind. Auf Kosten einer geringeren Wärmedämmungsfähigkeit kann auf diese Weise ein besonders witterungsbeständiges Dichtungsprofil 1 erreicht werden. Da der zweite Materialbereich 14 verglichen mit den bisher gezeigten, bevorzugten Ausführungsformen relativ klein ausgebildet ist, ist auch die Länge der ersten Kontaktlinie 141 bezogen auf den Gesamtumfang des Querschnitts des Dichtungsprofils 1 klein. Bei der in Fig. 4 gezeigten Ausführungsform weist der dritte Materialbereich 16 eine vergleichsweise große Erstreckung L₁₆ längs der Spaltachse S auf, wobei der dritte Materialbereich 16 vom Wulstabschnitt 6 aus auch weit in den Grundabschnitt 10 hineinragt. Bevorzugt ist der dritte Materialbereich mit Luft gefüllt, wobei eine Verformung des Wulstabschnittes 6 und angrenzender Bereiche des Grundabschnittes 10 durch die geringe Steifigkeit des Materials des dritten Materialbereiches 16 unter Aufbringung bereits geringer Kräfte möglich ist. Bei der in Fig. 4 dargestellten Ausführungsform liegt das Verhältnis der Erstreckung L₁₆ zur Erstreckung L₁ des Dichtungsprofils 1 längs der Spaltachse S in einem bevorzugten Bereich von ca. 0,5 bis 0,55.

**Bezugszeichenliste**

| | | | |
|---|---|---|---|
| 1 | Dichtungsprofil | 161 | Kontaktlinie |
| 2 | Glasscheibe | D₁₂ | Mindestdicke |
| 4 | Rahmen | D₆ | Dicke Wulstabschnitt |
| 6 | Wulstabschnitt | K₁₂ | Kontaktfläche |
| 8 | Lippenabschnitt | K₁₄ | Kontaktfläche |
| 10 | Grundabschnitt | L | Erstreckung |
| 12 | erster Materialbereich | L₁ | Erstreckung im ersten Zustand |
| 14 | zweiter Materialbereich | L₂ | stand Erstreckung im zweiten Zustand |
| 16 | dritter Materialbereich | | |
| 18 | Vertiefung | L₁₆ | Erstreckung |
| 62 | freies Ende, Wulstabschnitt | R₁₈ | Radius |
| 82 | freies Ende, Lippenabschnitt | S | Spaltachse |
| 141 | erste Kontaktlinie | | |

## Patentansprüche

1. Dichtungsprofil (1), insbesondere zur Anordnung zwischen einer Glasscheibe (2) und einem Rahmen (4), aufweisend einen Wulstabschnitt (6) und einen Lippenabschnitt (8),
wobei der Wulstabschnitt (6) und der Lippenabschnitt (8) mit einem Grundabschnitt (10) des Dichtungsprofils (1) verbunden sind und je ein freies Ende (62, 82) aufweisen,
wobei ein erster Materialbereich (12) vorgesehen ist, welcher sich zumindest im Grundabschnitt (10) erstreckt,
wobei ein zweiter Materialbereich (14) vorgesehen ist, welcher sich zumindest im Wulstabschnitt (6) erstreckt, wobei ein dritter Materialbereich (16) vorgesehen ist, welcher sich zumindest im Wulstabschnitt (6) und benachbart zum zweiten Materialbereich (14) erstreckt, wobei der dritte Materialbereich (16) aus einem Stoff geringerer Steifigkeit besteht als der erste und der zweite Materialbereich (12, 14),wobei die Querschnittsfläche des dritten Materialbereiches (16) eine erste Kontaktlinie (161) mit der Querschnittsfläche des zweiten Materialbereiches (14) ausbildet, wobei das Verhältnis der Länge der ersten Kontaktlinie (161) zum Umfang der Querschnittsfläche des dritten Materialbereiches (16) im Bereich von 0,2 bis 1 liegt **dadurch gekennzeichnet, dass** der erste Materialbereich, ausgehend von dem freien Ende des Wulstabschnitts über den Grundabschnitt bis zum freien Ende des Lippenabschnitts den zweiten Materialbereich umgibt.

2. Dichtungsprofil (1) nach Anspruch 1,
wobei das Verhältnis der Länge der ersten Kontaktlinie (161) zum Umfang der Querschnittsfläche des dritten Materialbereiches (16) im Bereich von 0,3 bis 0,8 und bevorzugt bei ca. 0,7 liegt.

3. Dichtungsprofil (1) nach einem der vorhergehenden Ansprüche,
wobei das Dichtungsprofil an einem Fenster angeordnet ist.

4. Dichtungsprofil (1) nach einem der vorhergehenden Ansprüche, aufweisend eine Erstreckung (L) entlang einer Spaltachse (S),
wobei in einem ersten Zustand das unverformte Dichtungsprofil (1) eine erste Erstreckung (L₁) aufweist und in einem zweiten Zustand das verformte Dichtungsprofil (1) eine zweite Erstreckung (L₂) aufweist, und
wobei das Verhältnis der zweiten Erstreckung (L₂) zur ersten Erstreckung (L₁) bei 0,5 bis 0,85, bevorzugt bei 0,6 bis 0,75 und insbesondere bevorzugt bei ca. 0,65 bis 0,7 liegt.

5. Dichtungsprofil (1) nach Anspruch 4,
wobei der dritte Materialbereich (16) im ersten Zustand des Dichtungsprofils (1) eine maximale Erstreckung (L₁₆) aufweist, die in einem Verhältnis von 0,05 bis 0,6, bevorzugt 0,2 bis 0,55 und insbesondere bevorzugt von ca. 0,25 bis 0,3 zur ersten Erstreckung (L₁) steht.

6. Dichtungsprofil (1) nach einem der vorhergehenden Ansprüche,
wobei angrenzend an den dritten Materialbereich (16) der erste Materialbereich (12) eine Mindestdicke (D₁₂) aufweist,
wobei auf derselben Geraden, entlang derer die Mindestdicke (D₁₂) gemessen ist, der Wulstabschnitt (6) eine Dicke (D₆) aufweist, und
wobei das Verhältnis der Mindestdicke (D₁₂) zur Dicke (D₆) im Bereich von 0,05 bis 0,6, bevorzugt 0,1 bis 0,45 und insbesondere bevorzugt ca. 0,25 bis 0,4 liegt.

7. Dichtungsprofil (1) nach einem der vorhergehenden Ansprüche,
wobei der Wulstabschnitt (6) eine Querschnittsfläche aufweist, die in einem Verhältnis von 0,1 bis 0,5, vorzugsweise 0,2 bis 0,4 und insbesondere bevorzugt von ca. 0,3 zur Querschnittsfläche des gesamten Dichtungsprofils (1) steht.

8. Dichtungsprofil (1) nach einem der vorhergehenden Ansprüche,
wobei die Querschnittsfläche des zweiten Materialbereiches (14) eine erste Kontaktlinie (141) mit der Querschnittsfläche des ersten Materialsbereiches (12) ausbildet, wobei das Verhältnis der Länge der ersten Kontaktlinie (141) zum Umfang der Querschnittsfläche des Dichtungsprofils (1) im Bereich von 0,1 bis 0,5, vorzugsweise 0,2 bis 0,4 und insbesondere bevorzugt bei ca. 0,3 bis 0,35 liegt.

9. Dichtungsprofil (1) nach einem der vorhergehenden Ansprüche,
wobei in einem zweiten Zustand des Dichtungsprofils (1) der Wulstabschnitt (6) derart an der Glasscheibe (2) anliegt, dass die Kontaktfläche (K₁₂) des ersten Materialbereiches (12) mit der Glasscheibe (2) zumindest ein 0,01- bis 0,5-faches, bevorzugt zumindest ein 0,05- bis 0,2-faches und besonders bevorzugt ein ca. 0,1- bis 0,15-faches einer Kontaktfläche (K₁₄) des zweiten Materialbereiches (14) mit der Glasscheibe (2) ist.

10. Dichtungsprofil (1) nach einem der vorhergehenden Ansprüche,
wobei in dem Bereich, in dem sich der Wulstabschnitt (6) und der Lippenabschnitt (8) am nächsten sind, eine Vertiefung (18) vorgesehen ist, wobei die Vertiefung (18) bevorzugt mit einem Radius (R₁₈) gerundet ausgebildet ist.

11. Dichtungsprofil (1) nach Anspruch 4 und 10,
wobei der Radius (R₁₈) in einem Verhältnis von 0,05 bis 0,3, bevorzugt 0,1 bis 0,2 und besonders bevorzugt von ca. 0,11 bis 0,13 zur Differenz der ersten Erstreckung (L₁) und der zweiten Erstreckung (L₂) steht.

## Claims

1. Seal profile (1), in particular for arranging between a glass pane (2) and a frame (4), having a bead portion (6) and a lip portion (8),
wherein the bead portion (6) and the lip portion (8) are connected to a bottom portion (10) of the seal profile (1) and each have a free end (62, 82), wherein a first material region (12) is provided, which extends at least in the bottom portion (10), wherein a second material region (14) is provided, which extends at least in the bead portion (6), wherein a third material region (16) is provided, which extends at least in the bead portion (6) and next to the second material region (14), wherein the third material region (16) consists of a less stiff material than the first and the second material region (12, 14), wherein the cross-sectional area of the third material region (16) forms a first contact line (161) with the cross-sectional area of the second material region (14), wherein the ratio of the length of the first contact line (161) to the circumference of the cross-sectional area of the third material region (16) is in the range from 0.2 to 1, **characterized in that** the first material region surrounds the second material region, starting from the free end of the bead portion, via the bottom portion and as far as the free end of the lip portion.

2. Seal profile (1) according to Claim 1,
wherein the ratio of the length of the first contact line (161) to the circumference of the cross-sectional area of the third material region (16) is in the range from 0.3 to 0.8 and is preferably about 0.7.

3. Seal profile (1) according to one of the preceding claims,
wherein the seal profile is arranged on a window.

4. Seal profile (1) according to one of the preceding claims,
having an extent (L) along a gap axis (S), wherein, in a first state, the undeformed seal profile (1) has a first extent (L₁) and, in a second state, the deformed seal profile (1) has a second extent (L₂), and
wherein the ratio of the second extent (L₂) to the first extent (L₁) is 0.5 to 0.85, preferably 0.6 to 0.75 and particularly preferably about 0.65 to 0.7.

5. Seal profile (1) according to Claim 4,
wherein the third material region (16) has, in the first state of the seal profile (1), a maximum extent (L₁₆) which is in a ratio of 0.05 to 0.6, preferably 0.2 to 0.55 and particularly preferably about 0.25 to 0.3 to the first extent (L₁).

6. Seal profile (1) according to one of the preceding claims,
wherein, next to the third material region (16), the first material region (12) has a minimum thickness (D₁₂),
wherein, on the same straight line along which the minimum thickness (D₁₂) is measured, the bead portion (6) has a thickness (D₆), and
wherein the ratio of the minimum thickness (D₁₂) to the thickness (D₆) is in the range from 0.05 to 0.6, preferably 0.1 to 0.45 and particularly preferably about 0.25 to 0.4.

7. Seal profile (1) according to one of the preceding claims,
wherein the bead portion (6) has a cross-sectional area which is in a ratio of 0.1 to 0.5, preferably 0.2 to 0.4 and particularly preferably about 0.3 to the cross-sectional area of the entire seal profile (1) .

8. Seal profile (1) according to one of the preceding claims,
wherein the cross-sectional area of the second material region (14) forms a first contact line (141) with the cross-sectional area of the first material region (12), wherein the ratio of the length of the first contact line (141) to the circumference of the cross-sectional area of the seal profile (1) is in the range from 0.1 to 0.5, preferably 0.2 to 0.4 and particularly preferably about 0.3 to 0.35.

9. Seal profile (1) according to one of the preceding claims,
wherein, in a second state of the seal profile (1), the bead portion (6) bears against the glass pane (2) such that the contact area (K₁₂) of the first material region (12) with the glass pane (2) is at least 0.01 to 0.5 times, preferably at least 0.05 to 0.2 times and particularly preferably about 0.1 to 0.15 times a contact area (K₁₄) of the second material region (14) with the glass pane (2).

10. Seal profile (1) according to one of the preceding claims,
wherein, in the region in which the bead portion (6) and the lip portion (8) are closest, a depression (18) is provided,
wherein the depression (18) is preferably formed in a rounded manner with a radius (R₁₈).

11. Seal profile (1) according to Claims 4 and 10,
wherein the radius (R₁₈) is in a ratio of 0.05 to 0.3, preferably 0.1 to 0.2 and particularly preferably about 0.11 to 0.13 to the difference between the first extent (L₁) and the second extent (L₂).

## Revendications

1. Profilé d'étanchéité (1), destiné en particulier à l'agencement entre une vitre (2) et un cadre (4), comprenant une portion de bourrelet (6) et une portion de lèvre (8),
dans lequel
la portion de bourrelet (6) et la portion de lèvre (8) sont reliées à une portion de base (10) du profilé d'étanchéité (1) et présentent chacune une extrémité libre (62, 82),
il est prévu une première zone de matériau (12) qui s'étend au moins dans la portion de base (10),
il est prévu une seconde zone de matériau (14) qui s'étend au moins dans la portion de bourrelet (6),
il est prévu une troisième zone de matériau (16) qui s'étend au moins dans la portion de bourrelet (6) et au voisinage de la seconde zone de matériau (14),
la troisième zone de matériau (16) est constituée en un matériau à rigidité inférieure à celle de la première et de la seconde zone de matériau (12, 14),
la surface de section transversale de la troisième zone de matériau (16) forme une première ligne de contact (161) avec la surface de section transversale de la seconde zone de matériau (14),
le rapport de la longueur de la première ligne de contact (161) sur le périmètre de la surface de section transversale de la troisième zone de matériau (16) est dans la plage de 0,2 à 1,
**caractérisé en ce que**
la première zone de matériau entoure la seconde zone de matériau en partant de l'extrémité libre de la portion de bourrelet jusqu'à l'extrémité libre de la portion de lèvre en passant par la portion de base.

2. Profilé d'étanchéité (1) selon la revendication 1,
dans lequel
le rapport de la longueur de la première ligne de contact (161) sur le périmètre de la surface de section transversale de la troisième zone de matériau (16) est dans la plage de 0,3 à 0,8 et de préférence d'environ 0,7.

3. Profilé d'étanchéité (1) selon l'une des revendications précédentes,
dans lequel
le profilé d'étanchéité est agencé au niveau d'une fenêtre.

4. Profilé d'étanchéité (1) selon l'une des revendications précédentes, présentant une extension (L) le long d'un axe d'intervalle (S),
dans lequel
dans un premier état, le profilé d'étanchéité (1) non déformé présente une première extension (L₁), et dans un second état, le profilé d'étanchéité (1) déformé présente une seconde extension (L₂), et
le rapport de la seconde extension (L₂) sur la première extension (L₁) est de 0,5 à 0,85, de préférence de 0,6 à 0,75 et de manière particulièrement préférée d'environ 0,65 à 0,7.

5. Profilé d'étanchéité (1) selon la revendication 4,
dans lequel
dans le premier état du profilé d'étanchéité, la troisième zone de matériau (16) présente une extension maximale (L₁₆) qui est dans un rapport de 0,05 à 0,6, de préférence de 0,2 à 0,55 et de manière particulièrement préférée d'environ 0,25 à 0,3 sur la première extension (L₁).

6. Profilé d'étanchéité (1) selon l'une des revendications précédentes,
dans lequel
la première zone de matériau (12) présente une épaisseur minimale (D₁₂) au voisinage de la troisième zone de matériau (16),
sur la même droite le long de laquelle se mesure l'épaisseur minimale (D₁₂), la portion de bourrelet (6) présente une épaisseur (D₆), et
le rapport de l'épaisseur minimale (D₁₂) sur l'épaisseur (D₆) est dans la plage de 0,05 à 0,6, de préférence de 0,1 à 0,45 et de manière particulièrement préférée d'environ 0,25 à 0,4.

7. Profilé d'étanchéité (1) selon l'une des revendications précédentes,
dans lequel
la portion de bourrelet (6) présente une surface de section transversale qui est dans un rapport de 0,1 à 0,5, de préférence de 0,2 à 0,4 et de manière particulièrement préférée d'environ 0,3 sur la surface de section transversale de l'ensemble du profilé d'étanchéité (1).

8. Profilé d'étanchéité (1) selon l'une des revendications précédentes,
dans lequel
la surface de section transversale de la seconde zone de matériau (14) forme une première ligne de contact (141) avec la surface de section transversale de la première zone de matériau (12),
le rapport de la longueur de la première ligne de contact (141) sur le périmètre de la surface de section transversale du profilé d'étanchéité (1) est dans la plage de 0,1 à 0,5, de préférence de 0,2 à 0,4 et de manière particulièrement préférée d'environ 0,3 à 0,35.

9. Profilé d'étanchéité (1) selon l'une des revendications précédentes,
dans lequel
dans un second état du profilé d'étanchéité (1), la portion de bourrelet (6) s'appuie contre la vitre (2) de telle sorte que la surface de contact (K₁₂) de la première zone de matériau (12) avec la vitre (2) est d'au moins 0,01 à 0,5 fois, de préférence d'au moins 0,05 à 0,2 fois et de manière particulièrement préférée d'environ 0,1 à 0,15 fois la surface de contact (K₁₄) de la seconde zone de matériau (14) avec la vitre (2).

10. Profilé d'étanchéité (1) selon l'une des revendications précédentes,
dans lequel
dans une zone dans laquelle la portion de bourrelet (6) et la portion de lèvre (8) sont les plus proches, il est prévu un renfoncement (18), le renfoncement (18) étant réalisé de préférence de façon arrondie avec un rayon (R₁₈).

11. Profilé d'étanchéité (1) selon la revendication 4 et 10,
dans lequel
le rayon (R₁₈) est dans un rapport de 0,05 à 0,3, de préférence de 0,1 à 0,2 et de manière particulièrement préférée d'environ 0,11 à 0,13 sur la différence de la première extension (L₁) et de la seconde extension (L₂).
